# EUROPEAN PATENT SPECIFICATION

(11) **EP 1 019 981 B1**
(45) Date of publication and mention of the grant of the patent: **05.01.2005**
(21) Application number: 98953338.5
(22) Date of filing: 09.10.1998
(51) Int. Cl.: H01R 3/00, G06K 13/08

(54) **MODULE HEADER APPARATUS**
MODULARES HALTEGERÄT
EMBASE DE MODULE

(30) Priority: 10.10.1997 US 63476
(43) Date of publication of application: 19.07.2000
(73) Proprietor: ROBINSON NUGENT, INC., New Albany, Indiana 47150-1208 (US)
(72) Inventor: RAMEY, Samuel, C., Louisville, KY 40205 (US); KUSTERS, Johannes, Petrus, Maria, New Albany, IN 47150 (US); BRAINARD, John, Paul, Louisville, KY 40299 (US)
(74) Representative: Croston, David
(86) International application number: PCT/US1998/021292
(87) International publication number: WO 1999/019941

(56) References cited:
- EP-A- 0 687 036
- US-A- 5 791 920
- US-A- 5 795 190

## Description

The present invention relates to an improved headed apparatus for receiving a PCMCIA module or card to make electrical connection with the card. More particularly, the present invention relates to an improved ejector mechanism for such header apparatus and an improved actuator for use with electrical connectors.

Memory cards, chip cards, or smart cards are typically data input devices which are connected to an electronic apparatus such as a personal computer or telephone. The data stored in the memory card is transferable into the electronic apparatus through an electrical connector coupled to the apparatus. The cards are movable from one apparatus to another.

Once the cards are inserted into a header connector, the cards have a relatively high extraction force to remove the cards from the heater connectors. Therefore, several types of ejector mechanisms have been developed to remove the cards from the header connectors. One such mechanism is shown in European Patent Application No.0687036A. That connector comprises a body and first and second spaced apart arms. An actuator button can be depressed to actuate an ejector mechanism which ejects a memory card.

The present invention provides an improved ejector system for use with a card header connector. The header connector includes a main insulative frame. A push rod actuator or button is slidably coupled to one side of the frame. No separate rivets or pins are required to couple the button to the connector body or to a separate ejector mechanism which is actuated by the button. The ejector mechanism also does not require pegs or fasteners to secure the ejector to the body of the connector.

According to the present invention, there is provided a header connector apparatus configured to receive an electronic card, the apparatus comprising:
a body having first and second spaced apart side arms formed integrally with the body and configured to receive the card therebetween,
an actuator button,
an ejector mechanism coupled to the body and the button, the ejector mechanism being configured to eject the card from the body upon longitudinal movement of the button relative to the body, characterised in that the first side arm has a longitudinally extending first dovetail member,
a longitudinally extending second dovetail member configured to mate with the first dovetail member to allow the button to move longitudinally relative to the body; and
the ejector mechanism includes a pivot cam configured to engage the body so that movement of the button relative to the body causes the ejector mechanism to pivot about the pivot cam to eject the card.

In the illustrated embodiment, the body includes a curved portion configured to receive the pivot cam. The pivot cam has a curved outer surface and the curved portion of the body has substantially the same radius as the outer surface of the pivot cam.

The illustrated body is formed to include a lip located between the first and second side arms. The lip is configured to extend over an edge of the ejector mechanism adjacent the arm. The illustrated ejector mechanism also includes a downwardly extending tab configured to engage an end edge of the card to eject the card from the header and an upturned front edge.

In the illustrated embodiment, the first flange includes a downwardly extending portion located in the notch and an outwardly extending portion located below the button. The opening in the body portion is formed by an elongated bar. The second flange is formed to include a downwardly extending portion extending through the opening and an outwardly extending portion under the bar.

In the illustrated embodiment, an ejector mechanism coupled to the connector and the first member of the button. The ejector mechanism is configured to eject an electronic card from the connector upon movement of the first member and the pressing part relative to the connector.

Also in the illustrated embodiment, at least one detent is formed on one of the first member and the pressing part to secure the first member to the pressing part upon insertion of the pressing part on to the first member. The illustrated detent includes a domed surface formed on the first member which is configured to enter an aperture formed in the pressing part.

The pressing part includes first and second spaced apart spring arms. Each spring arm is formed to include an aperture therein. The first member includes upper and lower domed surfaces configured to enter the apertures in the spring arms upon insertion in the pressing part on to the first member.

The first member is formed to include a guide bar, and the pressing part is formed to include a slot configured to slide over the guide bar of the first member to couple the pressing part to the first member. The illustrated guide bar and the slot each have generally rectangular shapes. The pressing part includes at least one lead-in ramp surface adjacent the slot to facilitate installation of the pressing part over the first member.

Additional objects, features, and advantages of the invention will become apparent to those skilled in the art upon consideration of the following detailed description of the illustrated embodiment exemplifying the best mode of carrying out the invention as presently perceived.

### Brief Description of the Drawings

The detailed description particularly refers to the accompanying figures in which:
Fig. 1 is an exploded perspective view of a header connector configured to receive a module or card which includes an ejector apparatus for ejecting the module or card;
Fig. 2 is a perspective view illustrating further details of the ejector mechanism coupled to an insulative plastic body of the connector, with the push rod or button of the ejector being extended from the connector body in its position when the card is inserted into the header connector;
Fig. 3 is a perspective view similar to Fig. 2 illustrating movement of the ejector mechanism to eject a card;
Fig. 4 is a perspective view of a bottom side of the header connector with the button extended when a card is inserted into the connector; and
Fig. 5 is a perspective view of the bottom side of the connector similar to Fig. 4 in which the button has been pushed inwardly to eject the card from the connector;
Fig. 6 is a perspective view of another embodiment of the present invention which includes a two piece button assembly for actuating the ejector mechanism;
Fig. 7 is a perspective view similar to Fig. 6 in which a pressing part of the button has been coupled to a sliding part of the button;
Fig. 8 is a top plan view with portions broken away illustrating the position of the ejector mechanism when the card is fully inserted into the header;
Fig. 9 is a to plan view similar to Fig. 8 illustrating movement of the ejector mechanism by the button to eject the card from the header;

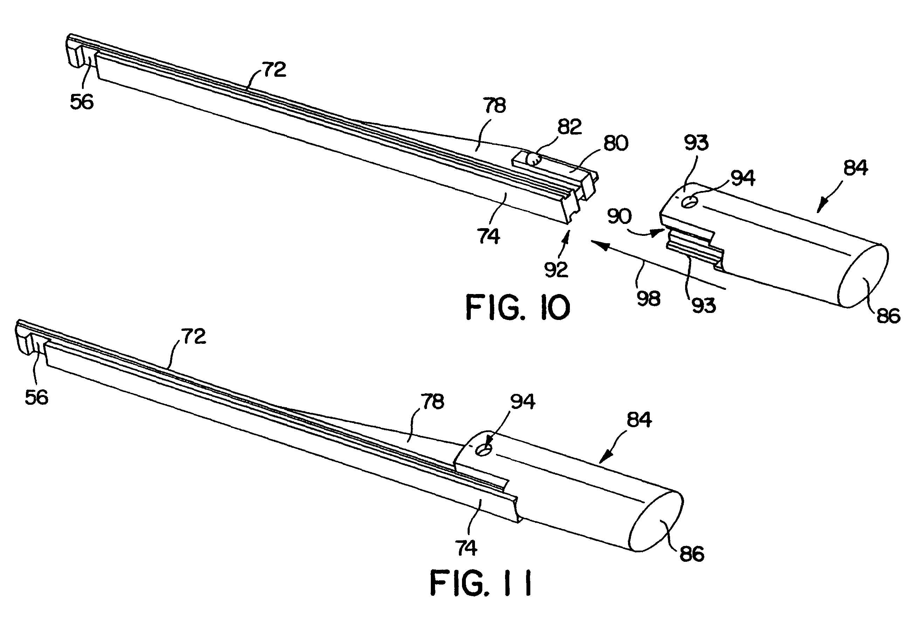

Fig. 10 is an exploded perspective view further illustrating the two parts of the button assembly in which the pressing part is separated from the sliding part;
Fig. 11 is a perspective view similar to Fig. 10 in which the pressing part is installed on the sliding part of the button;
Fig. 12 is a sectional view illustrating further details of the sliding part and pressing part of the button; and
Fig. 13 is a sectional view taken through the assembled button of Fig. 11 illustrating further details of the structure for coupling of the sliding part of the button to the pressing part of the button.

### Detailed Description of the Drawings

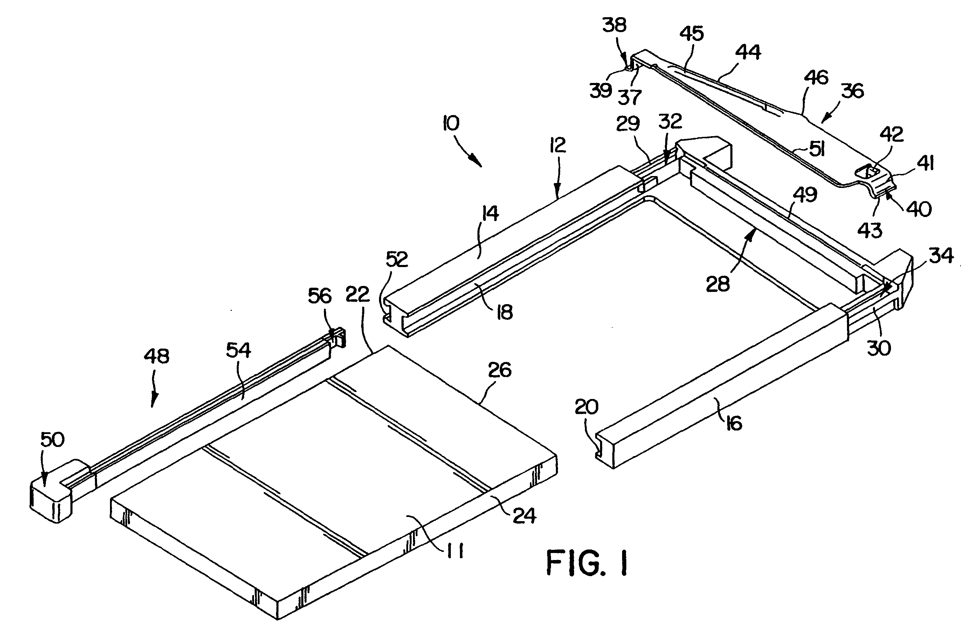

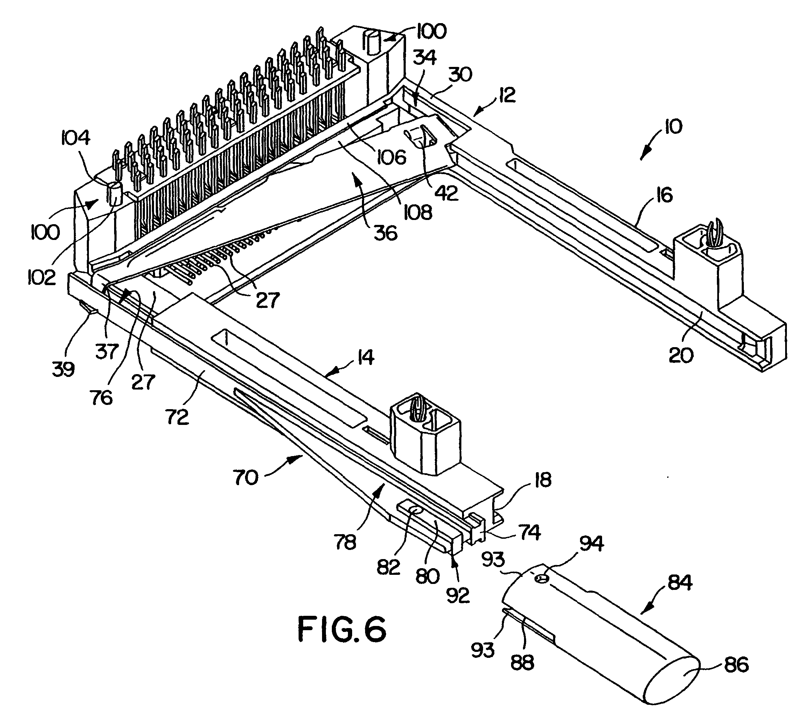

Referring now to the drawings, Fig. 1 illustrates a header connector apparatus 10 configured to receive a module or IC card 11. The header connector 10 includes an insulative plastic body 12 having integrally formed, spaced apart side arms 14 and 16. Therefore, separate side arms do not have to be installed on the body during assembly. Side arms 14 and 16 are formed to include inwardly facing U-shaped grooves 18 and 20, respectively, which are configured to receive opposite sides 22 and 24 of card 11 during insertion of the card 11 into the header connector 10. A leading end 26 of card 11 includes contacts (not shown) configured to engage terminal pins 27 (see Fig. 6) located along a contact portion 28 of header connector 10 in a conventional manner.

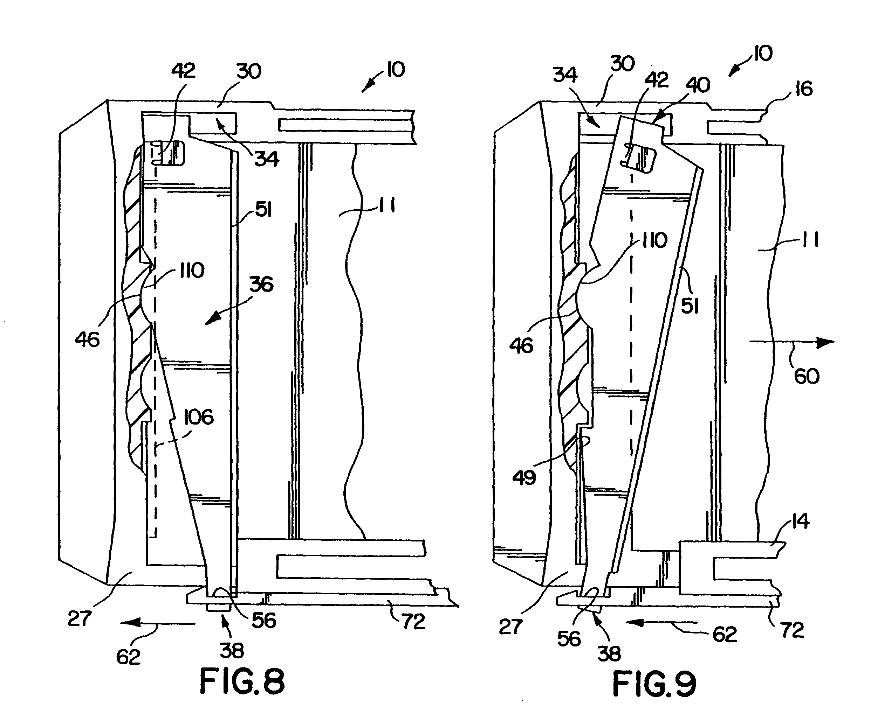

Insulative plastic body 12 is formed to include bars 29 and 30 which define openings 32 and 34 adjacent contact portion 28. The connector 10 also includes an ejector mechanism 36 which is illustratively stamp formed from a sheet metal material. Ejector mechanism 36 includes opposite curved flanges 38 and 40. Flange 38 includes a downwardly extending portion 37 and an outwardly extending portion 39. Flange 40 includes a downwardly extending portion 41 and an outwardly extending portion 43. Ejector mechanism 36 also includes a downwardly extending tab 42 which is configured to engage end 26 of card 11. Ejector mechanism 36 further includes a ramp surface 44 and pivot cam 46 which engages a ledge 49 on the plastic body 12 as shown in Fig. 9. In addition, ejector mechanism 36 includes an upturned front edge 51 which provides structural integrity and also provides a lead-in surface for insertion of the card 11.

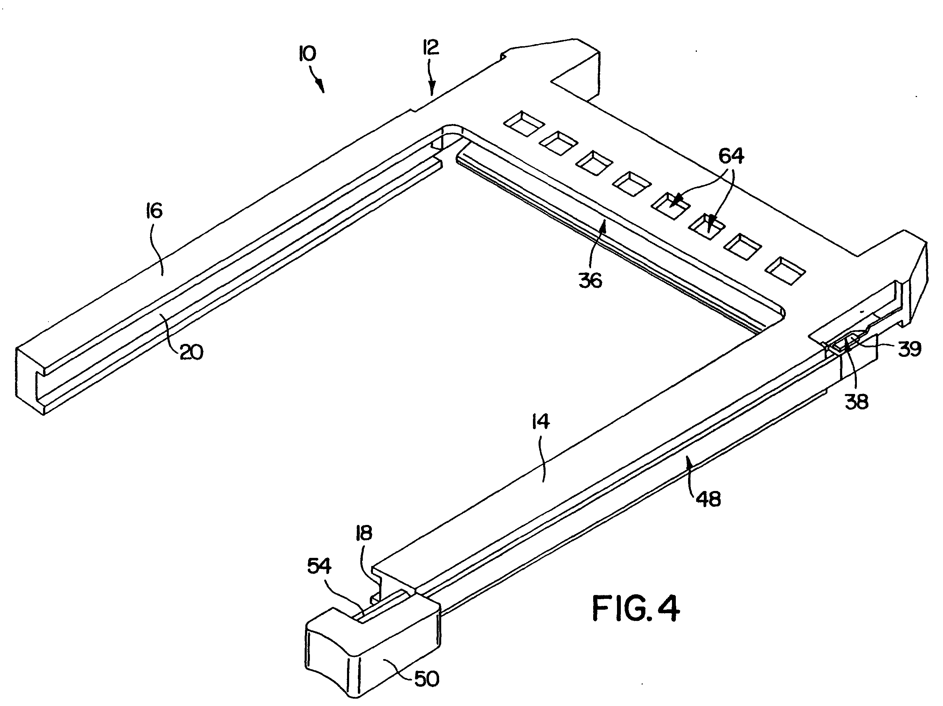

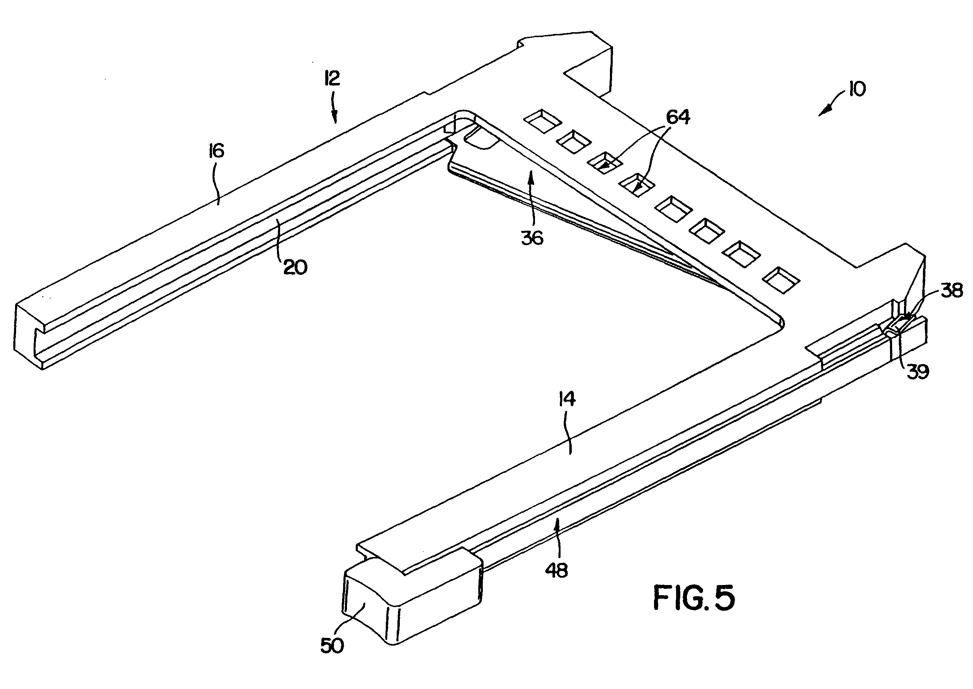

In the embodiment of Figs. 1-5, header connector 10 further includes a one-piece push rod or button 48 having a head 50 which provides an actuator for an operator to push in order to eject the card 11 from the header connector 10 as discussed below. Side arm 14 of connector body 12 is formed to include a female dovetail 52. Button 48 is formed to include a male dovetail 54 configured to slide within female dovetail 52 to couple the button 48 to the connector body 12. No fasteners are required to couple the connector body 12 to the button 48. An end of button 48 spaced apart from head 50 is formed to include a notch 56. The notch 56 is configured to receive the downwardly extending portion 37 of flange 38 therein. Outwardly extending portion 39 of flange 38 overlaps a side wall of the button 48 as best shown in Figs. 4 and 5 to couple the ejector mechanism 36 to the button 48.

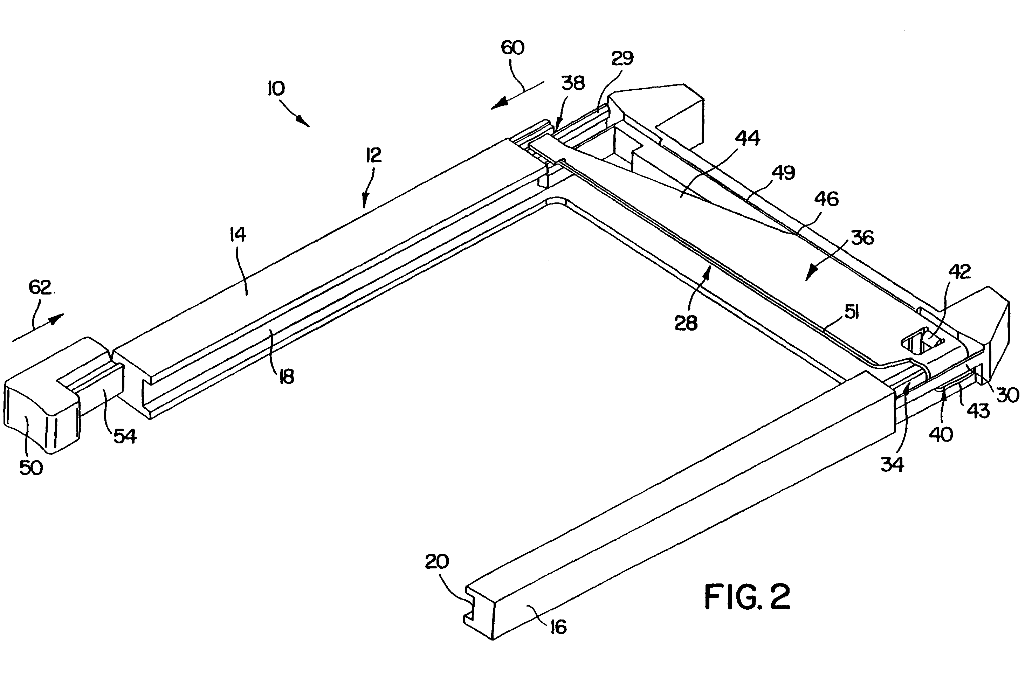

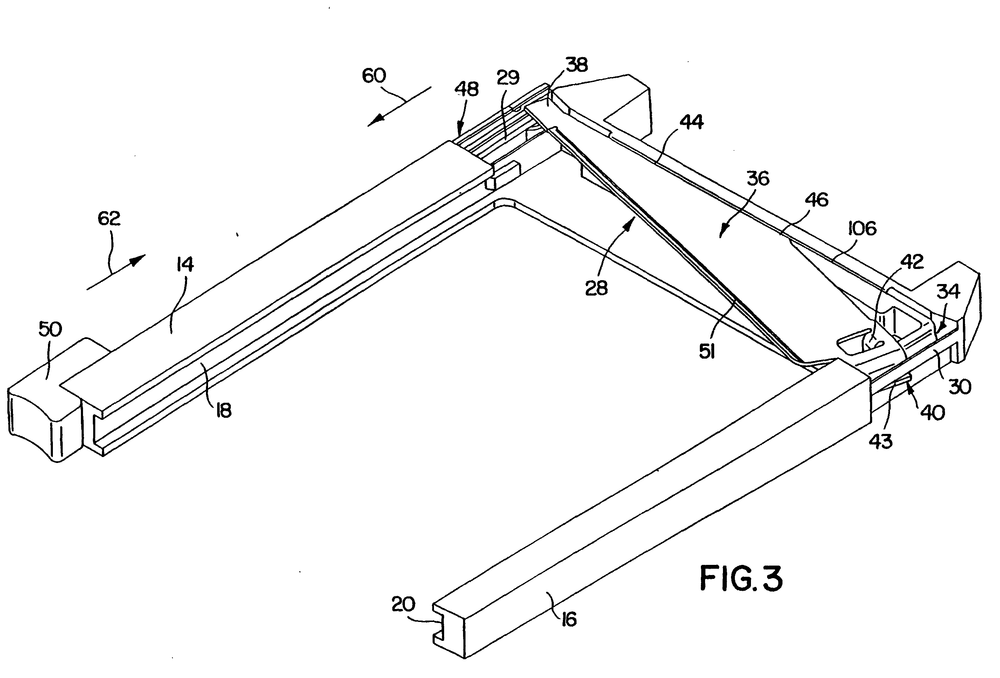

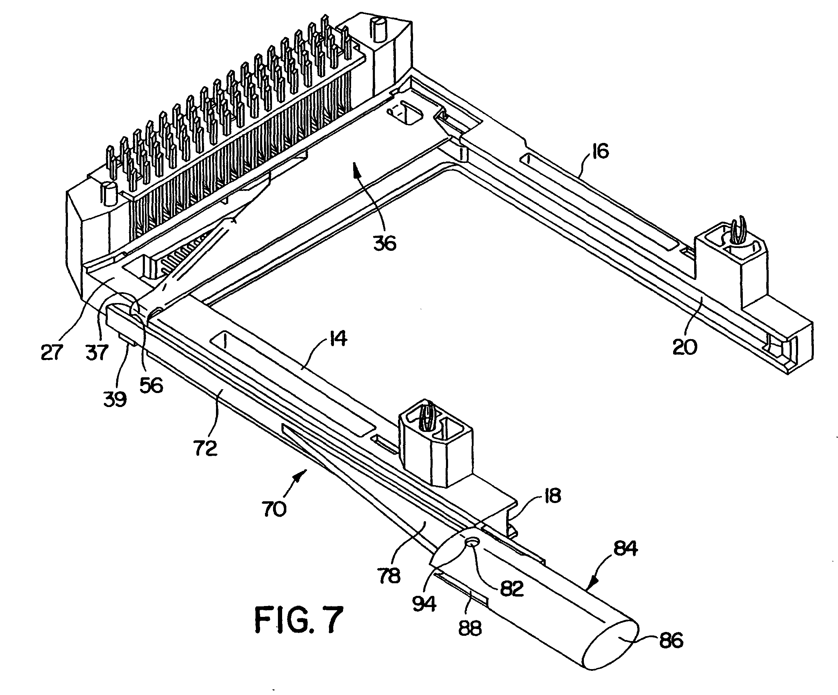

The flange 38 is configured to fit over bar 28 as illustrated in Figs. 2 and 3. In another embodiment shown in Figs. 6 and 7, bar 28 which defines the opening 32 is not provided. Instead, a solid surface 27 is formed on the connector body 12 on the side of the button 48. The flange 40 is interlocked with bar 30 by insertion of the flange 40 into the opening 34 as also illustrated in Figs. 2 and 3. Portion 41 of flange 40 extends downwardly through the opening 34. Outwardly extending portion 43 of flange 40 extends under the bar 30 to couple the ejector mechanism 36 to the body 12.

Fig. 2 illustrates the assembled header connector 10 in a position when the card 11 is fully inserted into the connector. For clarity, the card 11 is not shown in Figs. 2-5. When the card 11 is inserted, the end 26 of card 11 engages the tab 24 to move the ejector 36 to the position of Fig. 2. This causes the ejector 36 to pivot about pivot cam 46 to move the flange 38 in the direction of arrow 60. Pivoting movement of cam 46 is described below with reference to Figs. 8 and 9. Since section 37 of flange 38 is located within notch 56 of button 48, button 48 slides within arm 14 to an outwardly extended position shown in Figs. 2 and 4 as the flange 38 moves in the direction of arrow 60 during insertion of the card 11.

When it is desired to eject the card 11 from connector 10, the head 50 of button 48 is pushed inwardly toward the connector body 12 in the direction of arrow 62. This causes pivotable movement of the ejector 36 about pivot cam 46 to the position shown in Figs. 3 and 5. Tab 42 pushes the end 26 of card 11 in the direction of arrow 60 to eject the card 11 from the header connector 10.

Figs. 4 and 5 illustrate the plurality of apertures 64 formed in the connector body. The apertures 64 allow a card bus ground fingers (not shown) to make contact with a receptacle shield (not shown). The card bus shield is configured to be positioned over the connector body 12 adjacent apertures 64.

The ejector mechanism 36 of the present invention does not require the use of separate rivets or pins to perform rotation of the ejector mechanism 36 or to couple the button 48 or ejector 36 to the connector body 12. This facilitates manufacture and assembly of the header connector 10. The header connector 10 of the present invention also has a low profile and small outline. The dovetail ejector button 48 also facilitates maintaining a smaller outline of the connector 10. The dovetail interlock between the button 48 and the side arm 14 provides stability and strength for the ejector arm and permits formation of the ejector from a plastic material. The arms 14 and 16 are integrally formed with the body 12, and the ejector button 48 is easily installed into an end of arm 14 which reduces assembly costs. No rivets or pins are needed to attach the ejector mechanism 36 to the button 48.

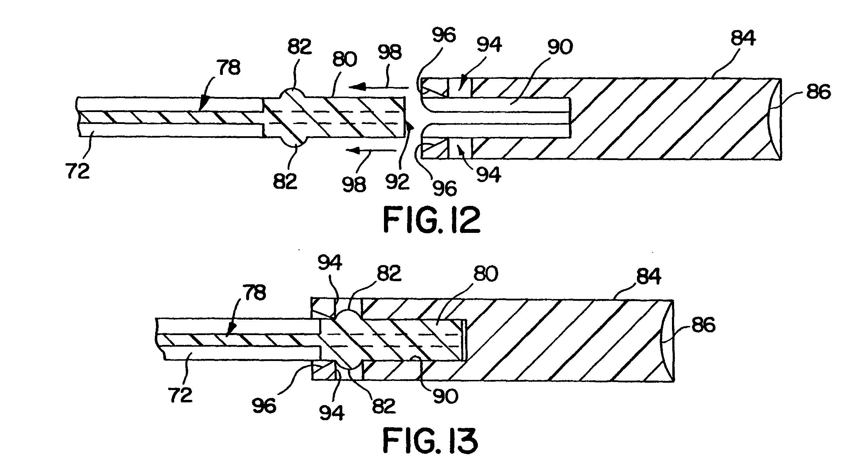

Another embodiment of the present invention is illustrated in Figs. 6 and 7. Those numbers referenced by numbers the same as Figs. 1-5 perform the same or similar function. In the embodiment of Figs. 6 and 7, a two piece actuator or button assembly 70 is provided. Button assembly 70 includes a sliding part 72 formed to include a male dovetail 74 and a notch 76. Sliding part 72 also includes a mounting section 78 having a rectangularly-shaped guide bar 80. Domed portions 82 are formed on top and bottom surfaces of guide bar 80 as best shown in Figs. 12 and 13. Button assembly 70 further includes a press part 84 having an end surface 86 configured to be pushed by an operator to eject a card 11. Press part 84 includes an opening having side slots 88 and a central rectangular slot portion 90 configured to slide over an end 92 of sliding part 72. Press part 84 includes spring arms 93 formed to include top and bottom apertures 94 which are configured to slide over and receive dome portions 82 on sliding part 72 to couple the press part 84 to the sliding part 72 as illustrated in Figs. 12 and 13. Press part 84 includes lead in ramp surfaces 96 to facilitate installation of the press part 84 over the end 92 of sliding part 72 in the direction of arrows 98 in Fig. 12.

The two piece button assembly 70 simplifies the assembly process for the memory card header 10. The header 10 having the sliding part 72 coupled to the side arm 14 of plastic body 12 can be assembled on to the printed circuit board either with or without the press part 84. Header 10 includes split pegs 100 having fixed posts 102 and spring arms 104 to retain the header 10. Without the press part 84, the connector 10 decreases space of a long button sticking out of the printed circuit board. In addition, the press part 84 may be assembled after assembling the application a front panel of a device. The two piece button assembly 70 provides more freedom in the total assembly process or sequence.

The two piece button assembly 70 further permits selecting different press part 84 configurations based on customer requests. Therefore, special button shapes, lengths, colors, textures, text, etc. may be provided on the press part 84 while the sliding part 72 remains uniform. In other words, the sliding part 72 is a standard part for all connectors while the press part 84 can be changed based on customer request.

The press part 84 is easily installed on the sliding part 72 by sliding it over the end 92 the sliding part 72 in the direction of arrows 98 of Fig. 12. Top and bottom arms 93 ramp apart so that the arms slide over domes 82. The arms 93 snap over the domes 82 when apertures 94 are aligned with the domes 82 to lock the press part 84 and the sliding part 72 together. It is understood that the domes 82 may be formed on the press part 84, if desired. In addition, another suitable detent or latch may be used to secure the sliding part 72 to the press part 84. A click indicates when the press part 84 is seated over the domes 82 of the sliding part 72. The press part 84 can be removed from the sliding part 72 for disassembly or customer design change.

Illustratively, the press part 84 is formed from a thermoplastic material with color, shape, length, texture being changed for customer requests. The sliding part 72 is also a thermoplastic material and is typically a standard color. As discussed above, the press part 84 can be assembled on the sliding part 72 before assembly of the header connector 10 on to the printed circuit board or after assembly of the header connector on to the printed circuit board. Other assembly sequences are possible. The press part 84 also provides easy disassembly of the header connector 10.

Figs. 6-9 illustrate further details of the pivoting movement of ejector mechanism 36. Plastic body 12 includes a lip portion 106 defining a gap above surface 108 for receiving an end edge of the ejector mechanism 36. The lip 106 prevents the ejector mechanism 36 from slipping out of position or twisting during movement of the ejector mechanism 36. The cam 46 of ejector mechanism 36 pivots within a curved portion 110 formed on header 10 configured to receive the cam 46. The radius of curved portion 110 substantially matches the radius of cam 46. Curved or rounded portion 110 prevents the cam from slipping during actuation. As the ejector button 48 or 70 is pushed in the direction of arrow 62, ejector mechanism 36 pivots about the cam 46 in curved portion 110 to the position shown in Fig. 9 to eject the card 11. Tab 42 pushes end edge 26 of the card outwardly in the direction of arrow 60 to eject the card 11 from the header 10. A second curved portion 112 is provided in case the ejector mechanism is to be reversed with the button 48, 70 on the second arm 16.

## Claims

1. A header connector apparatus (10) configured to receive an electronic card (1), the apparatus comprising:
a body (12) having first and second spaced apart side arms (14, 16) formed integrally with the body and configured to receive the card therebetween,
an actuator button (48),
an ejector mechanism (36) coupled to the body and the button, the ejector mechanism being configured to eject the card from the body upon longitudinal movement of the button relative to the body, **characterised in that** the first side arm has a longitudinally extending first dovetail member (52),
a longitudinally extending second dovetail member (54) configured to mate with the first dovetail member to allow the button to move longitudinally relative to the body; and
the ejector mechanism includes a pivot cam (46) configured to engage the body so that movement of the button relative to the body causes the ejector mechanism to pivot about the pivot cam to eject the card.

2. The header connector apparatus of claim 1, wherein the button includes a notch (56) and the ejector mechanism includes a flange (38), the notch being configured to receive a portion (37) of the flange therein to couple the button to the ejector mechanism.

3. The header connector apparatus of claim 1, wherein the ejector mechanism is stamp formed from a sheet of metal material.

4. The header connector apparatus of claim 1, wherein the body is formed to include an opening (34) adjacent the second arm, the button is formed to include a notch portion (56), and the ejector mechanism includes first and second opposite flanges (38, 40), the first flange (38) being located in the notch portion of the button to couple the ejector mechanism to the button, and the second flange (40) extending through the opening formed in the body adjacent the second arm the ejector mechanism also having a pivot cam (48) positioned between the first and second flanges so that movement of the button causes the ejector mechanism to pivot about the pivot cam to eject the card.

5. The apparatus of claim 4, wherein the body includes a curved portion (110) configured to receive the pivot cam.

6. The apparatus of claim 5, wherein the body is formed to include a lip (106) located between the first and second side arms, the lip being configured to extend over an edge of the ejector mechanism adjacent the cam.

7. The apparatus of claim 4, wherein the first flange includes a downwardly extending portion (37) located in the notch and an outwardly extending portion (39) located below the button, and the opening in the body portion is formed by an elongated bar (30), the second flange being formed to include a downwardly extending portion (41) extending through the opening and an outwardly extending portion (40) extending under the bar.

8. The apparatus of claim 1, wherein the button includes a first member (72) coupled to the first side arm of the body, and a pressing part (84) coupled to the first member, the pressing part being configured to be engaged by an operator to move the first member and the pressing part relative to the body.

9. The apparatus of claim 8, further comprising at least one detent (82) formed on one of the first member and the pressing part to secure the first member to the pressing part upon insertion of the pressing part on to the first member.

10. The apparatus of claim 9, wherein the detent includes a domed surface (82) formed on the first member which is configured to enter an aperture (94) formed in the pressing part.

11. The apparatus of claim 8, wherein the pressing part includes first and second spaced apart spring arms (93), each spring arm being formed to include an aperture (94) therein, and the first member includes upper and lower domed surfaces configured to enter the apertures in the spring arms upon insertion on the pressing part on to the first member.

12. The apparatus of claim 8, wherein the pressing part includes a slot (88) configured to slide over an end of the first member, pressing part including at least one lead-in ramp surface (96) adjacent the slot to facilitate installation of the pressing part over the first member.

13. The apparatus of claim 6, wherein the pivot cam has a curved surface and the curved portion of the body has substantially the same radius as the outer surface of the pivot cam.

14. The apparatus of claim 1, wherein the ejector mechanism includes a downwardly extending tab (42) configured to engage an end edge (26) of the card to eject the card from the header.

15. The apparatus of claim 1, wherein the ejector mechanism includes an upturned front edge (51).

16. The apparatus of claim 5, wherein the ejector mechanism includes a ramp surface (44) adjacent the first flange.

17. The apparatus of claim 16, wherein the ejector mechanism includes a stop located adjacent the ramp surface.

18. The apparatus of claim 9, wherein the first member is formed to include a guide bar (78), and the pressing part is formed to include a slot (88) configured to slide over the guide bar of the first member to couple the pressing part to the first member.

19. The apparatus of claim 18, wherein the guide bar and the slot each have generally rectangular shapes.

20. The apparatus of claim 18, further comprising a detent (82) formed on one of the guide bar and the pressing part to secure the pressing part to the first member.

21. The apparatus of claim 9, wherein the pressing part includes a slot (88) configured to slide over an end of the first member, pressing part including at least one lead-in ramp surface (96) adjacent the slot to facilitate installation of the pressing part over the first member.

## Patentansprüche

1. Basisteil-Konnektorvorrichtung (10) zur Aufnahme einer elektronischen Karte (1), mit:
einem Körper (12) mit ersten und zweiten voneinander beabstandeten Seitenarmen (14,16), die einstückig mit dem Körper ausgebildet und zur Aufnahme der Karte zwischen sich konfiguriert sind,
einem Betätigungs-Drückelement (48),
einem mit dem Körper und dem Drückelement verbundenen Auswurfmechanismus (36), der konfiguriert ist zum Auswerfen der Karte aus dem Körper bei Längsbewegung des Drückelements relativ zu dem Körper,
**dadurch gekennzeichnet, dass**
der erste Seitenarm ein längsverlaufendes erstes Schwalbenschwanzteil (52) aufweist,
ein längsverlaufendes zweites Schwalbenschwanzteil (54) zum derartigen passenden Zusammengreifen mit dem ersten Schwalbenschwanzteil konfiguriert ist, dass das Drückelement sich in Längsrichtung relativ zu dem Körper bewegen kann; und
der Auswurfmechanismus einen Schwenk-Nocken (46) aufweist, der zum Zusammengriff mit dem Körper dahingehend konfiguriert ist, dass eine Bewegung des Drückelements relativ zu dem Körper eine um den Schwenk-Nocken herum erfolgende Schwenkung des Auswurfmechanismus zwecks Auswerfens der Karte bewirkt.

2. Basisteil-Konnektorvorrichtung nach Anspruch 1, bei der das Drückelement eine Nut (56) aufweist und der Auswurfmechanismus einen Flansch (38) aufweist, wobei die Nut konfiguriert ist zur Aufnahme eines Teils (37) des Flansches in sich, um das Drückelement mit dem Auswurfmechanismus zu verbinden.

3. Basisteil-Konnektorvorrichtung nach Anspruch 1, bei der der Auswurfmechanismus aus einer Metallmaterialbahn gestanzt ist.

4. Basisteil-Konnektorvorrichtung nach Anspruch 1, bei der in dem Körper nahe dem zweiten Arm eine Öffnung (34) ausgebildet ist, in dem Drückelement ein Nutabschnitt (56) ausgebildet ist und der Auswurfmechanismus erste und zweite einander gegenüberliegende Flansche (38,40) aufweist, wobei der erste Flansch (38) derart in dem Nutabschnitt des Drückelements angeordnet ist, dass der Auswurfmechanismus mit dem Drückelement verbunden ist, und der zweite Flansch (40) sich durch die in dem Körper nahe dem zweiten Arm ausgebildete Öffnung erstreckt, wobei der Auswurfmechanismus ferner einen Schwenk-Nocken (48) aufweist, welcher derart zwischen den ersten und zweiten Flanschen positioniert ist, dass eine Bewegung des Drückelements den Auswurfmechanismus zu einer Schwenkung um den Schwenk-Nocken zwecks Auswurfs der Karte veranlasst.

5. Vorrichtung nach Anspruch 4, bei der der Körper einen gekrümmten Teil (110) aufweist, der zur Aufnahme des Schwenk-Nockens konfiguriert ist.

6. Vorrichtung nach Anspruch 5, bei der an dem Körper eine zwischen den ersten und zweiten Seitenarmen angeordnete Lippe (106) ausgebildet ist, die derart konfiguriert ist, dass sie sich über einen nahe dem Nocken gelegenen Rand des Auswurfmechanismus erstreckt.

7. Vorrichtung nach Anspruch 4, bei der der erste Flansch einen nach unten abstehenden Teil (37), der in der Nut angeordnet ist, und einen nach außen abstehenden Teil (39) aufweist, der unterhalb des Drückelements angeordnet ist, und die in dem Körper vorgesehene Öffnung durch eine längliche Stange (30) gebildet ist, wobei an dem zweiten Flansch ein nach unten abstehender Teil (41), der sich durch die Öffnung erstreckt, und ein nach außen abstehender Teil (40) ausgebildet sind, der sich unter der Stange erstreckt.

8. Vorrichtung nach Anspruch 1, bei der das Drückelement ein erstes Teil (72), das mit dem ersten Seitenarm des Körpers verbunden ist, und ein Drückteil (84) aufweist, das mit dem ersten Teil verbunden ist, wobei das Drückteil derart konfiguriert ist, dass es von einer Bedienungsperson betätigt werden kann, um das erste Teil und das Drückteil relativ zu dem Körper zu bewegen.

9. Vorrichtung nach Anspruch 8, ferner mit mindestens einem an dem ersten Teil oder dem Drückteil ausgebildeten Halteteil (82), um beim Aufschieben des Drückteils auf das erste Teil das erste Teil an dem Drückteil zu sichern.

10. Vorrichtung nach Anspruch 9, bei der das Halteteil eine an dem ersten Teil ausgebildete gewölbte Fläche (82) aufweist, die zum Eintritt in eine in dem Drückteil ausgebildete Öffnung (94) konfiguriert ist.

11. Vorrichtung nach Anspruch 8, bei der das Drückteil erste und zweite voneinander beabstandete Federarme (93) aufweist, wobei in jedem Federarm eine Öffnung (94) ausgebildet ist, und das erste Teil obere und untere gewölbte Flächen aufweist, die derart konfiguriert sind, dass sie beim Aufschieben des Drückteils auf das erste Teil in die Öffnungen der Federarme eintreten.

12. Vorrichtung nach Anspruch 8, bei der das Drückteil einen Schlitz (88) aufweist, der zum Gleiten über ein Ende des ersten Teils konfiguriert ist, wobei das Drückteil mindestens eine Einführungs-Rampenfläche (96) nahe dem Schlitz aufweist, um die Installation des Drückteils über dem ersten Teil zu erleichtern.

13. Vorrichtung nach Anspruch 6, bei der der Schwenk-Nocken eine gekrümmte Fläche aufweist und der gekrümmte Teil des Körpers im Wesentlichen den gleichen Radius wie die Außenfläche des Schwenk-Nockens aufweist.

14. Vorrichtung nach Anspruch 1, bei der der Auswurfmechanismus einen nach unten abstehenden Vorsprung (42) aufweist, der zum Angreifen an einem Endrand (26) der Karte konfiguriert ist, um die Karte aus dem Basisteil auszuwerfen.

15. Vorrichtung nach Anspruch 1, bei der der Auswurfmechanismus einen nach oben gewandten Vorderrand (51) aufweist.

16. Vorrichtung nach Anspruch 5, bei der der Auswurfmechanismus eine Rampenfläche (44) nahe dem ersten Flansch aufweist.

17. Vorrichtung nach Anspruch 16, bei der der Auswurfmechanismus einen nahe der Rampenfläche angeordneten Stoppteil aufweist.

18. Vorrichtung nach Anspruch 9, bei der an dem ersten Teil eine Führungsstange (78) ausgebildet ist und an dem Drückteil ein Schlitz (88) ausgebildet ist, der zum Gleiten über die Führungsstange des ersten Teils ausgebildet ist, um das Drückteil mit dem ersten Teil zu verbinden.

19. Vorrichtung nach Anspruch 18, bei der die Führungsstange und der Schlitz jeweils eine im Wesentlichen rechteckige Form aufweisen.

20. Vorrichtung nach Anspruch 18, ferner mit einem an dem Führungsteil oder dem Drückteil ausgebildeten Halteteil (82), um das Drückteil an dem ersten Teil zu sichern.

21. Vorrichtung nach Anspruch 9, bei der das Drückteil einen Schlitz (88) aufweist, der zum Gleiten über ein Ende des ersten Teils konfiguriert ist, wobei das Drückteil mindestens eine Einführungs-Rampenfläche (96) nahe dem Schlitz aufweist, um die Installation des Drückteils über dem ersten Teil zu erleichtern.

## Revendications

1. Dispositif de connecteur d'embase (10) configuré pour recevoir une carte électronique (1), comprenant :
- un corps (12) possédant des premier et second bras latéraux espacés (14, 16) formés, de façon intégrale, avec le corps et configurés pour recevoir la carte entre eux ;
- un bouton d'actionnement (48) ;
- un mécanisme d'éjection (36) couplé au corps et au bouton, le mécanisme d'éjection étant configuré pour éjecter la carte à partir du corps lors d'un déplacement longitudinal du bouton par rapport au corps ;
**caractérisé en ce que** le premier bras latéral possède une première pièce en queue d'aronde (52) s'étendant de façon longitudinale ;
- une seconde pièce en queue d'aronde (54) s'étendant de façon longitudinale et configurée pour s'adapter à la première pièce en queue d'aronde afin de permettre un déplacement longitudinal du bouton par rapport au corps ; et
- le mécanisme d'éjection comprend une came de pivotement (46) configurée pour engager le corps de telle façon qu'un déplacement du bouton par rapport au corps provoque un pivotement du mécanisme d'éjection autour de la came de pivotement afin d'éjecter la carte.

2. Dispositif de connecteur d'embase selon la revendication 1, dans lequel le bouton comprend une encoche (56) et le mécanisme d'éjection comprend un rebord (38), l'encoche étant configurée pour y recevoir une partie (37) du rebord afin de coupler le bouton au mécanisme d'éjection.

3. Dispositif de connecteur d'embase selon la revendication 1, dans lequel le mécanisme d'éjection est embouti à partir d'une feuille de matériau métallique.

4. Dispositif de connecteur d'embase selon la revendication 1, dans lequel le corps est formé pour comprendre une ouverture (34) adjacente au second bras, le bouton est formé pour comprendre une partie d'encoche (56) et le mécanisme d'éjection comprend des premier et second rebords opposés (38, 40), le premier rebord (38) étant prévu dans la partie d'encoche du bouton afin de coupler le mécanisme d'éjection au bouton, et le second rebord (40) traversant l'ouverture formée dans le corps adjacente au second bras, le mécanisme d'éjection possédant, de même, une came de pivotement (48) positionnée entre les premier et second rebords de telle façon que le déplacement du bouton provoque un pivotement du mécanisme d'éjection autour de la came de pivotement afin d'éjecter la carte.

5. Dispositif selon la revendication 4, dans lequel le corps comprend une partie incurvée (110) configurée pour recevoir la came de pivotement.

6. Dispositif selon la revendication 5, dans lequel le corps est formé pour comprendre une lèvre (106) située entre les premier et second bras latéraux, la lèvre étant configurée pour s'étendre sur un bord du mécanisme d'éjection adjacent à la came.

7. Dispositif selon la revendication 4, dans lequel le premier rebord comprend une partie s'étendant vers le bas (37) située dans l'encoche et une partie s'étendant vers l'extérieur (39) située en dessous du bouton, et l'ouverture dans la partie de corps est formée par une barre allongée (30), le second rebord étant formé pour comprendre une partie s'étendant vers le bas (41) traversant l'ouverture et une partie s'étendant vers l'extérieur (40) s'étendant sous la barre.

8. Dispositif selon la revendication 1, dans lequel le bouton comprend une première pièce (72) couplée au premier bras latéral du corps et une partie de pression (84) couplée à la première pièce, la partie de pression étant configurée pour entre engagée par un opérateur afin de déplacer la première pièce et la partie de pression par rapport au corps.

9. Dispositif selon la revendication 8, comprenant de plus au moins un cliquet (82) formé sur une pièce parmi la première pièce et la partie de pression afin de fixer la première pièce sur la partie de pression lors d'une insertion de la partie de pression sur la première pièce.

10. Dispositif selon la revendication 9, dans lequel le cliquet comprend une surface en dôme (82) formée sur la première pièce et configurée pour pénétrer dans une ouverture (94) formée dans la partie de pression.

11. Dispositif selon la revendication 8, dans lequel la partie de pression comprend des premier et second bras à ressort espacés (93), chaque bras à ressort étant formé pour inclure une ouverture (94), et la première pièce comprend des surfaces supérieure et inférieüre en dôme configurées pour pénétrer dans les ouvertures des bras à ressort lors d'une insertion de la partie de pression sur la première pièce.

12. Dispositif selon la revendication 8, dans lequel la partie de pression comprend une fente (88) configurée pour coulisser sur une extrémité de la première pièce, la partie de pression comprenant au moins une surface de rampe d'entrée (96) adjacente à la fente pour faciliter l'installation de la partie de pression sur la première pièce.

13. Dispositif selon la revendication 6, dans lequel la came de pivotement possède une surface incurvée et la partie incurvée du corps présente sensiblement le même rayon que la surface externe de la came de pivotement.

14. Dispositif selon la revendication 1, dans lequel le mécanisme d'éjection comprend une languette s'étendant vers le bas (42) configurée pour engager un bord d'extrémité (26) de la carte afin d'éjecter la carte de l'embase.

15. Dispositif selon la revendication 1, dans lequel le mécanisme d'éjection comprend un bord avant tourné vers le haut (51).

16. Dispositif selon la revendication 5, dans lequel le mécanisme d'éjection comprend une surface de rampe (44) adjacente au premier rebord.

17. Dispositif selon la revendication 16, dans lequel le mécanisme d'éjection comprend une butée adjacente à la surface de rampe.

18. Dispositif selon la revendication 9, dans lequel la première pièce est formée pour inclure une barre de guidage (78) et la partie de pression est formée pour inclure une fente (88) configurée pour coulisser sur la barre de guidage de la première pièce afin de coupler la partie de pression et la première pièce.

19. Dispositif selon la revendication 18, dans lequel la barre de guidage et la fente présentent chacun des formes globalement rectangulaires.

20. Dispositif selon la revendication 18, comprend, de plus, un cliquet (82) formé sur une pièce parmi la barre de guidage et la partie de pression afin de fixer la partie de pression sur la première pièce.

21. Dispositif selon la revendication 9, dans lequel la partie de pression comprend une fente (88) configurée pour coulisser sur une extrémité de la première pièce, la partie de pression comprenant au moins une surface de rampe d'entrée (96) adjacente à la fente afin de faciliter l'installation de la partie de pression sur la première pièce.
